# EUROPEAN PATENT APPLICATION

(11) **EP 2 549 360 A1**
(43) Date of publication of application: **23.01.2013**
(21) Application number: 12162753.3
(22) Date of filing: 30.03.2012
(51) Int. Cl.: G06F 1/32

(54) **Display device, host device, display system, methods of controlling the display device, the host device, and the display system**

(30) Priority: 21.07.2011 KR 20110072587
(71) Applicant: Samsung Electronics Co., Ltd., Suwon-si, Gyeonggi-do, 443-742 (KR)
(72) Inventor: Park, Sang-hyurk, Gyeonggi-do (KR); Jeong, Won-sik, Gyeonggi-do (KR)
(74) Representative: Bruce, Alexander Richard Henry

(57) **Abstract**

A display device is provided that includes a display unit; a communication interface unit which communicates with the host device; a signal generation unit which generates a power save mode switching signal for switching the host device to a power save mode; and a control unit which controls the power save mode switching signal to be generated by the signal generation unit and transmitted to the host device in response to an input source currently being output from the host device to the display unit being switched from being output from the host device to being output from another device to the display device.

## Description

The present invention relates to providing a display device, a host device, a display system, and control methods of the display device, the host device, and the display system, and more particularly, to providing a display device capable of realizing a power save mode for a host device, the host device, a display system, and control methods of the display device, the host device, and the display system.

Due to recent developments in imaging technology, users not only can use imaging devices to watch TV broadcasts or to output audio/video (A/V) signals received from external input devices, but also can use imaging devices to perform personal computer (PC) tasks.

Nowadays, imaging devices can receive a variety of input signals and output a variety of input sources. That is, imaging devices have become multi-functional.

However, a PC may continue to operate regardless of whether a display device connected thereto uses a PC screen, and may thus result in a waste of power even when the display device is used for purposes other than as a PC monitor.

Exemplary embodiments address at least the above problems and/or disadvantages and other disadvantages not described above. Also, the present invention is not required to overcome the disadvantages described above, and an exemplary embodiment may not overcome any of the problems described above.

One or more exemplary embodiments provide a display device capable of switching a host device to a power save mode in response to the switching of an input source. Additional exemplary embodiments provide the host device, a display system, and methods of controlling the display device, the host device, and the display system.

According to an aspect of an exemplary embodiment, there is provided a display device connected to at least one host device which provide input sources to the display device, the display device including a display unit; a communication interface unit which communicates with the host device; a signal generation unit which generates a power save mode switching signal for switching the host device to a power save mode; and a control unit which controls the power save mode switching signal to be generated by the signal generation unit and transmitted to the host device in response to the input source currently being output from the host device to the display unit being switched from being output from the host device to being output from another device to the display device.

The host device may be a personal computer (PC).

The current input source includes at least one of a PC mode, a TV mode, an A/V (audio/video) mode, and a component mode.

The communication interface unit may include at least one of a serial interface, a High Definition Multimedia Interface (HDMI) interface, and a D-subminiature (D-sub) interface.

The control unit may output the power save mode switching signal using an HDMI-Consumer Electronics Control (CEC) interface.

According to another aspect of an exemplary embodiment, there is provided a host device connected to at least one display device, the host device including a communication interface unit which communicates with the display device; a monitoring unit which monitors a state of signals that are being received via the communication interface unit from the display device; and a control unit which, in response to the monitoring unit detecting a power save mode switching signal received from the display device, controls the host device to switch to a power save mode.

The power save mode switching signal may be a signal generated in response to an input source received by the display device to be displayed being switched from being output by the host device to the display device to being output from another device to the display device.

The communication interface includes at least one of a serial interface, an HDMI interface, and a D-sub interface.

According to another aspect of an exemplary embodiment, there is provided a control method of a display device connected to at least one host device, the control method including switching an input source currently being output to the display device from being provided to the display device by the host device to being provided to the display device by another device; generating a power save mode switching signal for switching the host device to a power save mode; and transmitting the power save mode switching signal to the host device.

The host device may include a PC.

The display device operates in a display mode selected from a personal computer (PC) mode, a television (TV) mode, an audio/video (A/V) mode, and a component mode, and the switching the input source includes switching the display mode and providing the input source by a source device selected based on the selected display mode.

The transmitting the power save mode switching signal may include transmitting the power save mode switching signal using at least one communication interface selected from a serial interface, an HDMI interface, and a D-sub interface.

The transmitting the power save mode switching signal may include, in response to the input source being switched from being provided by the host device to being provided by another device, transmitting the power save mode switching signal using an HDMI-CEC interface.

According to another aspect of an exemplary embodiment, there is provided a control method of a host device connected to at least one display device, the control method including monitoring a state of signals that are being received from the display device via a communication interface unit that communicates with the display device; and in response to detecting a power save mode switching signal received from the display device during the monitoring, , controlling the host device to switch to a power save mode.

The power save mode switching signal may be a signal generated in response to an input source received by the display device being switched from being provided to the display device by the host device to being provided to the display device by another device.

The communication interface includes at least one of a serial interface, an HDMI interface, and a D-sub interface.

According to another aspect of an exemplary embodiment, there is provided a recording medium having recorded thereon a program for executing a control method of a display device connected to at least one host device, the control method including switching an input source currently being output to the display device from being provided to the display device by the host device to being provided to the display device by another device; generating a power save mode switching signal for switching the host device to a power save mode; and transmitting the power save mode switching signal to the host device.

According to another aspect of an exemplary embodiment, there is provided a recording medium having recorded thereon a program for executing a control method of a host device connected to at least one display device, the control method including monitoring a state of signals that are being received from the display device via a communication interface unit that communicates with the display device; and in response to detecting a power save mode switching signal received from the display device during the monitoring, controlling the host device to switch to a power save mode.

According to another aspect of an exemplary embodiment, there is provided a display system including a display device which outputs an input source on a screen and a host device which is connected to the display device and which provides the input source to the display device, wherein the display device generates a power save mode switching signal for switching the host device to a power-save mode and transmits the power save mode switching signal to the host device in response to the input source being switched from being provided to the display device by the host device to being provided to the display device by another device, and the host device enters the power save mode in response to receiving the power save mode switching signal.

According to another aspect of an exemplary embodiment, there is provided a control method of a display system including a display device and a host device which are connected to each other, the control method including, in response to an input source provided to the display device by the host device for displaying being switched from being provided to the display device by the host device to being provided to the display device by another device, generating a power save mode switching signal for switching the host device to a power save mode; transmitting the power save mode switching signal from the display device to the host device; and in response to receiving the power save mode switching signal, switching the host device to the power save mode.

The above and/or other aspects will be more apparent by describing in detail exemplary embodiments, with reference to the accompanying drawings, in which:
FIG. 1 is a block diagram of a display device according to an exemplary embodiment;
FIG. 2 is a block diagram of a host device according to an exemplary embodiment;
FIGS. 3A and 3B are diagrams illustrating switching a host device from one operating mode to another operating mode according to an exemplary embodiment;
FIGS. 4A through 4C are diagrams illustrating methods of switching a host device to a power save mode, according to exemplary embodiments;
FIG. 5 is a flowchart illustrating a method of controlling a display device and a host device according to an exemplary embodiment;
FIG. 6 is a flowchart illustrating a method of controlling a display device according to an exemplary embodiment;
FIG. 7 is a flowchart illustrating a method of controlling a host device according to an exemplary embodiment.

Certain exemplary embodiments will now be described in greater detail with reference to the accompanying drawings.

In the following description, the same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

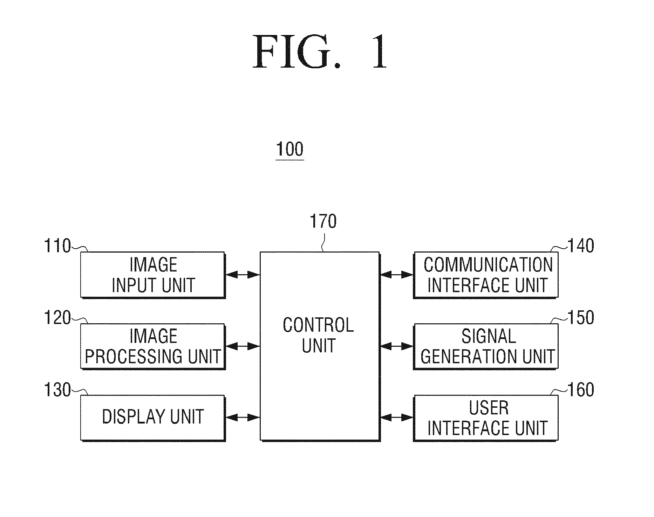

FIG. 1 is a block diagram of a display device according to an exemplary embodiment.

Referring to FIG. 1, display device 100 includes an image input unit 110, an image processing unit 120, a display unit 130, a communication interface unit 140, a signal generation unit 150, a user interface unit 160, and a control unit 170. The term "unit" as used herein means a hardware component, such as a processor or circuit, and/or a software component that is executed by a hardware component such as a processor.

The display device 100 may be implemented as a multi-functional monitor (MFM). That is, the display device 100 may be configured to receive a variety of external image signals, and may be equipped with a TV tuner. For example, the display device 100 may be implemented as a monitor that may be used as a personal computer (PC) monitor, and that may perform various functions independently without a requirement of a PC environment.

The image input unit 110 may receive image signals from a variety of input sources.

More specifically, the image input unit 110 may receive image signals from various input sources such as, for example, a PC, a television (TV), a digital versatile disc (DVD) player, an MP3 player, a mobile phone, or the like. Accordingly, the display device 100 may be configured to operate in at least one of a PC mode, a TV mode, an A/V mode, and a component mode. For example, the PC mode may be a mode in which the display device 100 receives image signals from a computer connected thereto for displaying the image signals, the TV mode may be a mode in which the display device 100 receives image signals from a terrestrial broadcasting station or a cable TV broadcasting station for displaying the image signals, and the A/V mode may be a mode in which the display device 100 receives image signals from an external device connected thereto, such as a DVD player or the like, for displaying the image signals.

The image processing unit 120 may process various image signals that are received by the image input unit 110.

More specifically, the image processing unit 120 may perform signal processing such as video decoding, format analysis, video scaling, or the like and other operations such as graphical user interface (GUI) addition on various image signals that are received by the image input unit 110.

The image processing unit 120 may adjust screen brightness differently for different input sources. For example, the image processing unit 120 may provide a display screen with lower luminance during the PC mode than during the TV mode.

The display unit 130 may display image signals that are provided by the image processing unit 120.

For example, the display unit 130 may be implemented as a liquid crystal display (LCD) panel, a plasma display panel (PDP) , a vacuum fluorescent display (VFD), a field emission display (FED), an electro luminescence display (ELD), or the like.

The communication interface unit 140 may communicate with at least one host device (not shown). For example, the communication unit 140 may be implemented as at least one of a serial interface, an High Definition Multimedia Interface (HDMI) interface, and D-subminiature D-sub interface. In this example, the HDMI interface may be implemented as an HDMI-Consumer Electronics Control (CEC) interface.

In response to the occurrence of a predefined event, the signal generation unit 150 may generate a power save mode switching signal for switching the host device, which is connected to the display device 100 via the communication interface unit 140, to a power save mode. The power save mode may be an operating mode during which power supplied to at least some or almost all modules of a system (e.g., modules of the host device) is cut off or the supply of power to the system is minimized in response to the system not performing any tasks.

The host device may be implemented as a PC. The predefined event may include switching an input source currently being output to the display device 100 from the host device to another device.

The user interface unit 160 may receive a user command from a user via an input device such as, for example, a one-way remote control, a two-way remote control, a mouse, a touch screen, or the like, and may interpret the received user command.

More specifically, the user interface unit 160 may receive a user command for selecting an input source to be output to the display device 100. In this example, a menu for selecting an input source may be processed using an on screen display (OSD) method.

The user interface unit 160 may receive various user commands for controlling the operation of the display device 100.

The control unit 170 may control the general functions of the display device 100.

In response to an input source currently being output from the host device to the display device 100 being switched from the host device to another device, the control unit 170 may control the communication interface unit 140 to transmit the power save mode switching signal, which is generated by the signal generation unit 150 of the display device 100, to the host device.

For example, in response to the current input source of the display device 100 being switched from the host device to another device, the control unit 170 may output the power save mode switching signal using an HDMI-CEC interface to the host device.

For example, in response to the display device 100 being switched from the PC mode to the TV mode, the control unit 170 may transmit a power save mode switching signal for switching the display device 100 from the PC mode to the TV mode to a PC so that the PC may enter the power save mode.

In some aspects, the control unit controls the power save mode switching signal to be generated by the signal generation unit and transmitted to the host device in response to the input source being switched from being output from the host device to being output from another device.

In this example, the control unit 170 may change the output voltage of signals that are being output via the communication interface unit 140, thereby notifying the PC that the display device 100 has been released from the PC mode. The PC may detect the power save mode switching signal transmitted by the control unit 170, and may enter the power save mode. Accordingly, the control unit 170 maintains certain output voltage levels of signals output to each connected input source, and changing the output voltage level of these signals can be used to instruct an input source to enter the power save mode and to instruct another input source to leave the power save mode.

The display device 100 may also include a user interface (UI) processing unit (not shown) which adjusts the transparency, color, size, shape, and location of UI elements and applies various effects such as highlighting, animation, or the like to UI elements, and a storage unit (not shown) which stores various programs for driving the display device 100.

In the example illustrated in FIG. 1, the image input unit 110 and the communication interface unit 140 may be separate hardware elements of the display device 100. In another non-limiting example, the image input unit 110 and the communication interface unit 140 may be incorporated into a single hardware element.

In the example illustrated in FIG. 1, the display device 100 and the host device such as, for example, a PC, may be separate devices. In another non-limiting example, the display device 100 and the host device may be formed in one body with each other. In this example, circuitry may be configured such that the generation and the transmission of a power save mode switching signal may be performed in a single device into which the display device 100 and the host device are incorporated.

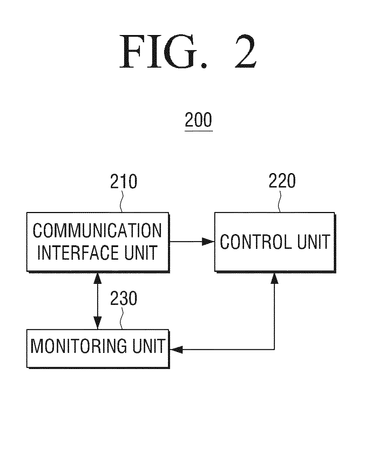

FIG. 2 is a block diagram of a host device according to an exemplary embodiment.

Referring to FIG. 2, host device 200 includes a communication interface unit 210, a control unit 220, and a monitoring unit 230.

The host device 200 may be connected to the display device 100 illustrated in FIG. 1, and may be configured to output various images and information via the screen of the display device 100. For example, the host device 200 may be implemented as a PC.

The communication interface unit 210 may communicate with the display device 100. The communication interface unit 210 may be implemented as at least one of a serial interface, an HDMI interface, and a D-sub interface.

The monitoring unit 230 may monitor the state of signals that are being received via the communication interface unit 210, including those signals received from the display device 100.

In response to the results of the monitoring performed by the monitoring unit 230 indicating that a power save mode switching signal from the display device 100 has been detected, the control unit 220 receives the results and may control the host device 200 to switch to a power save mode. The power save mode may be an operating mode during which power supplied to almost all modules of a system (e.g., the host device 200) is cut off or the supply of power to the system is minimized in response to the system not performing any tasks.

The power save mode switching signal may be a signal generated in response to an input source currently being output to the display device 100 being switched from the host device 200 to another device such as, for example, a TV.

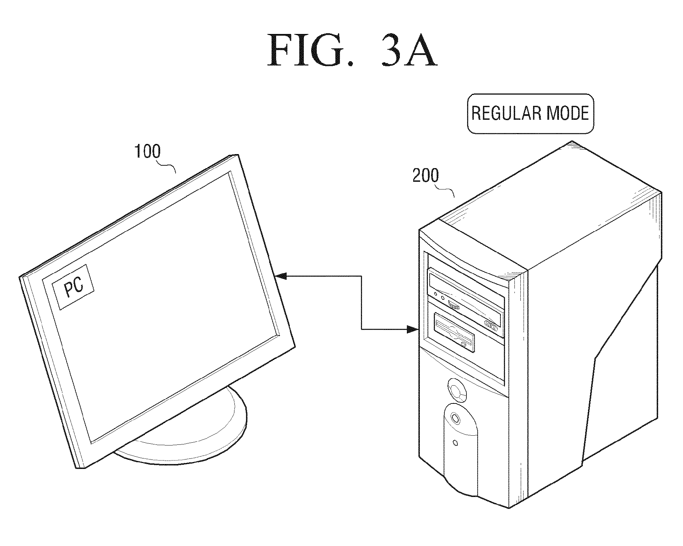

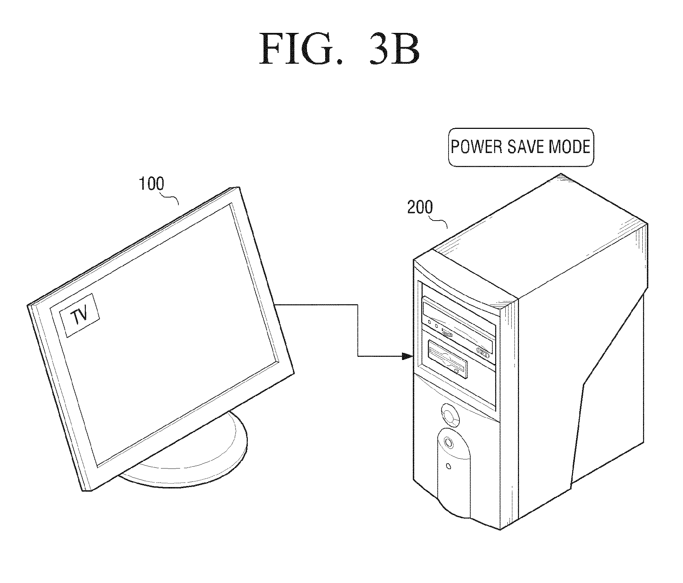

FIGS. 3A and 3B are diagrams illustrating switching a host device from one operating mode to another operating mode according to an exemplary embodiment.

In response to an input source currently being output to the display device 100 being switched from the host device 200 to another device, the display device 100 may generate a power save mode switching signal, and may transmit the generated power save mode switching signal to the host device 200.

In response to the receipt of the power save mode switching signal, the host device 200 may be switched to the power save mode.

For example, referring to FIGS. 3A and 3B, the display device 100 may be switched from displaying a display screen in accordance with the driving of the host device 200, such as a PC, to displaying a display screen according to an operating mode corresponding to an input source other than the host device 200, for example a TV. That is, the display device 100 may be switched between display modes, from a PC mode to a TV mode.

In this example, if the display device is switched from the PC mode to the TV mode, the display device 100 may transmit a power save mode switching signal to the host device 200 so that the host device 200 may leave a regular mode to enter the power save mode.

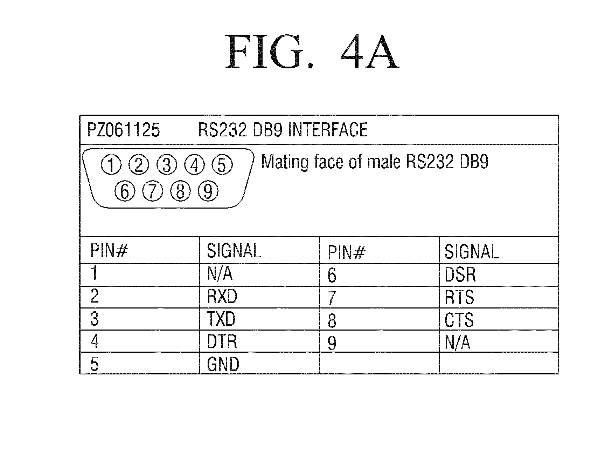

FIGS. 4A through 4C are diagrams illustrating methods of switching a host device to a power save mode, according to exemplary embodiments.

More specifically, a method of switching a host device to a power save mode using a serial interface, according to an exemplary embodiment is described with reference to FIG. 4A.

A serial port is an input/output (I/O) port for use in a computer for sequentially transmitting data to an external device in units of bits, and is often referred to as a 'COM' port. Examples of the serial port include RS-232, RS-422, and the like.

FIG. 4A illustrates an example of a 9-pin port. For example, referring to FIG. 4A, assume that first and ninth pins of the 9-pin port are not in use, and that second, third, fourth, fifth, sixth, seventh, and eighth pins of the 9-pin port are used for transmitting a received data (RXD) signal, a transmitted data (TXD) signal, a data terminal ready (DTR) signal, a ground (GND) signal, a data set ready (DSR) signal, a request to send (RTS) signal, and a clear to send (CTS) signal, respectively.

In this example, a display device may change the output voltage of the first and ninth pins, which are not used for transmitting signals, in response to an input source currently being output to the display device being switched from a PC to another device, and the driver program present in the PC (i.e., present in the monitoring unit 230) may detect a power save mode switching signal, and may thus allow the PC to enter the power save mode. For example, by using a software program installed in the PC, it is possible to communicate with the display device 100 via a display data channel/command interface (DDC/CI) protocol.

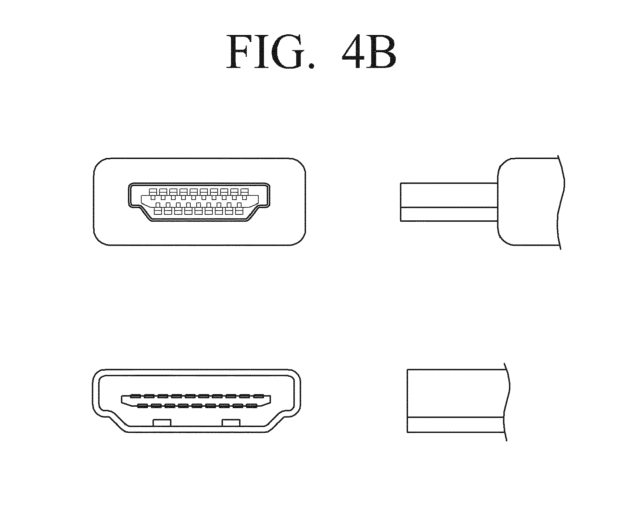

A method of switching a host device to a power save mode using an HDMI interface, according to an exemplary embodiment is described with reference to FIG. 4B.

HDMI is a digital A/V connector for transmitting uncompressed digital data, and may provide an interface between a multimedia source, such as a set-top box, a DVD player, or the like, and a device, such as an A/V device, a monitor, a digital TV, or the like.

An HDMI connector may be classified as type A (19 pins), type B (29 pins), or type C (19 pins). FIG. 4B illustrates an example of a type A 19-pin HDMI connector.

More specifically, a type A plug HDMI connector is illustrated in the top half of FIG. 4B, and a type A receptacle HDMI connector is illustrated in the bottom half of FIG. 4B.

For example, referring to FIG. 4B, assume that first, second, third, fourth, fifth, sixth, seventh, eighth, ninth, tenth, eleventh, twelfth, thirteenth, fifteenth, sixteenth, seventeenth, eighteenth, and nineteenth pins of a type A HDMI connector are used as Transition Minimized Differential Signaling (TMDS) Data 2+, TMDS Data 2 Shield, TMDS Data 2-, TMDS Data 1+, TMDS Data 1 Shield, TMDS Data 1-, TMDS Data 0+, TMDS Data 0 Shield, TMDS Data 0-, TMDS Clock+, TMDS Clock Shield, TMDS Clock-, CEC, serial clock SCL, serial data line SDA, DDC/CEC Ground, 5V+ Power, and Hot Plug Detect, respectively.

In this example, a fourteenth pin of the type A HDMI connector may be connected to a General Purpose Input/Output (GPIO) port. Then, in response to an input source currently being output to a display device being switched from a PC to another device, the display device may change the output voltage of the fourteenth pin of the type A HDMI connector so that the PC may determine whether to switch to the power save mode.

For example, the display device may set the fourteenth pin of the type A HDMI connector to High (+5V) (or Ground) if PC input is required, and may set the fourteenth pin of the type A HDMI connector to Ground (or High (+5V) otherwise. Accordingly, the PC may determine whether there is a need to switch to the power save mode based on the output voltage of the fourteenth pin of the type A HDMI connector with the aid of a driver program provided in the monitoring unit 230.

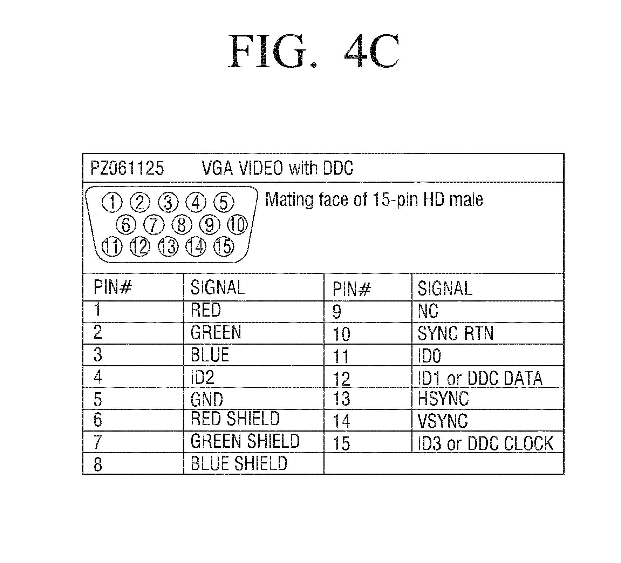

A method of switching a host device to a power save mode using a D-sub interface, according to an exemplary embodiment is described with reference to FIG. 4C.

For example, a D-sub interface may be implemented as a DA-15/DE-15 port using 15 pins that may be connected to a monitor, a projector, or the like. In another example, a D-sub interface may be implemented as a DE-9 port (9 pins), a DB-25 port (25 pins), an HDB-50 port (50 pins), an HDB-68 port (68 pins), or the like.

Referring to FIG. 4C, in a case in which a ninth pin of a D-sub interface is not in use (NC), it may be connected to a GPIO port. Then, in response to an input source currently being output to a display device being switched from a PC to another device, the display device may change the output voltage of the ninth pin of the D-sub interface so that a PC may determine whether there is a need to switch to the power save mode.

For example, the display device may set the ninth pin of the D-sub interface to High (+5V) (or Ground) if no PC input is required, and may set the ninth pin of the D-sub interface to Ground (or High (+5V) otherwise. Accordingly, the PC may determine whether there is a need to switch to the power save mode based on the output voltage of the fourteenth pin of the type A HDMI connector with the aid of a driver program provided by the monitoring unit 230.

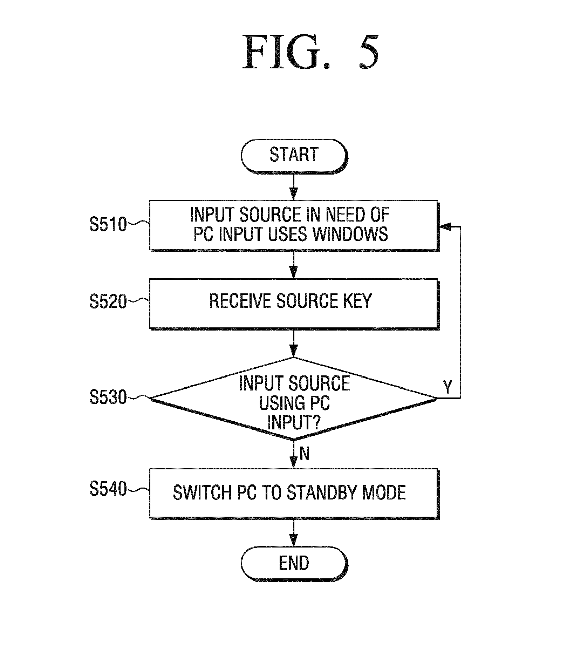

FIG. 5 is a flowchart illustrating a method of controlling a display device and a host device, according to an exemplary embodiment.

For convenience, assume that a host device is implemented as a PC.

Referring to FIG. 5, in S510, an input source that requires PC input may be in the process of using a Windows program in a PC, and a relevant display screen may be output via a display device.

In S520, the display device receives a source key for selecting another input source.

In S530, in response to the source key for selecting another input source being received in S520, a determination may be made as to whether the selected input source requires PC input.

In S540, in a case in which the selected input source does not require the use of PC input (S530:N), the PC may be switched to a standby mode (or a power save mode).

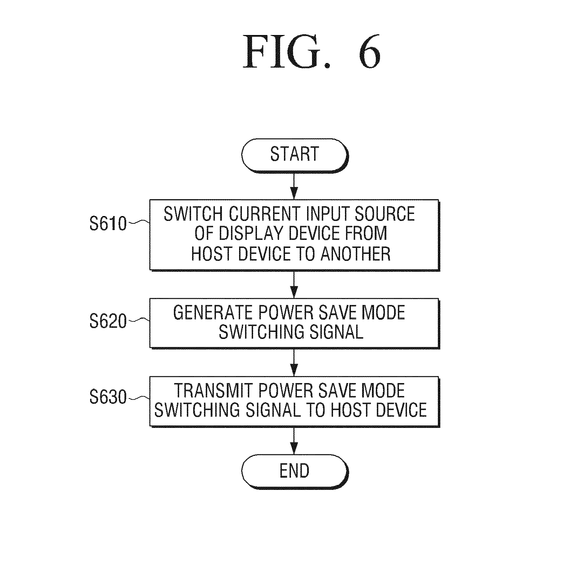

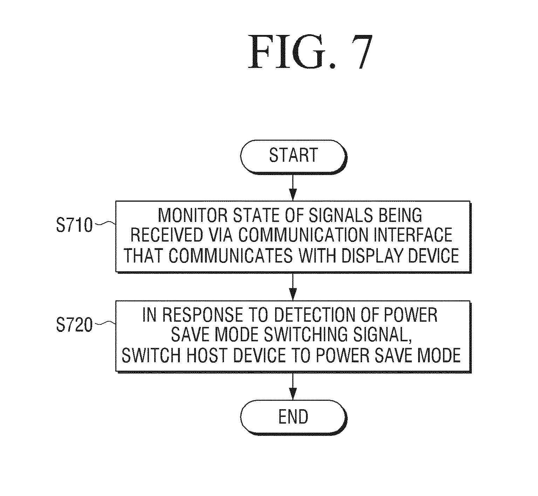

Methods of controlling a display device and a host device, according to exemplary embodiments are described with reference to FIGS. 6 and 7.

FIG. 6 is a flowchart illustrating a method of controlling a display device according to an exemplary embodiment.

Referring to FIG. 6, in S61o, an input source currently being output to a display device is switched from a host device to another device.

In S620, in response to the input source currently being output to the display device being switched from the host device to another device in S610, a power save mode switching signal for switching the host device to a power save mode may be generated by the display device. For example, the host device may be a PC.

In S630, the power save mode switching signal may be transmitted to the host device. For example, the power save mode switching signal may be transmitted to the host device by the display device via at least one of the following communication interfaces: a serial interface, an HDMI interface, and a D-sub interface.

The display device may include at least one of a PC mode, a TV mode, an A/V mode, and a component mode, each mode corresponding to an input source selected to receive input signals that are to be output via the display device.

For example, in S630, in response to the current input source of the display device being switched from the host device to another device, the power save mode switching signal may be transmitted to the host device by changing the output voltage of a communication interface.

FIG. 7 is a flowchart illustrating a method of controlling a host device according to an exemplary embodiment.

Referring to FIG. 7, in S710, the state of signals being received via a communication interface of a host device that communicates with a display device may be monitored. For example, the communication interface may be implemented as at least one of a serial interface, an HDMI interface, and a D-sub interface.

In S720, in response to a power save mode switching signal for switching a host device to a power save mode being detected by the host device, the host device may be switched to the power save mode. For example, the host device may be implemented as a PC, and the display device may be implemented as an MFM.

The power save mode switching signal may be a signal generated in response to an input source currently being output to the display device 100 being switched from the host device 200 to another device.

As described above, it is possible to automatically switch a PC to a power save mode in response to an input source currently being output to a display device (e.g., an MFM), which may be used not only as a PC monitor but also for performing various other functions independently of a PC environment, being switched from the PC to another device. Accordingly, it is possible to reduce the power consumption of the PC when it is not outputting an input source to the display device.

The foregoing exemplary embodiments and advantages are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A display device connected to a host device which provides an input source to the display device, the display device comprising:
a display unit;
a communication interface unit which communicates with the host device;
a signal generation unit which generates a power save mode switching signal for switching the host device to a power save mode; and
a control unit which controls the power save mode switching signal to be generated by the signal generation unit and transmitted to the host device in response to the input source currently being output from the host device to the display unit being switched to being output from another device to the display device.

2. The display device as claimed in claim 1, wherein the host device is a personal computer (PC).

3. The display device as claimed in claim 1, wherein the display device operates in a display mode selected from a personal computer (PC) mode, a television (TV) mode, an audio/video (A/V) mode, and a component mode, and receives the input source from a source device selected based on the selected display mode.

4. The display device as claimed in claim 1, wherein the communication interface unit includes at least one of a serial interface, an HDMI (High Definition Multimedia Interface) interface, and a D-sub (D-subminiature) interface.

5. The display device of claim 4, wherein the control unit outputs the power save mode switching signal using an HDMI-CEC (Consumer Electronics Control) interface.

6. A host device connected to at least one display device, the host device comprising:
a communication interface unit which communicates with the display device;
a monitoring unit which monitors a state of signals that are being received via the communication interface unit from the display device; and
a control unit which, in response to the monitoring unit detecting a power save mode switching signal received from the display device, controls the host device to switch to a power save mode.

7. The host device as claimed in claim 6, wherein the power save mode switching signal is a signal generated in response to an input source received by the display device to be displayed being switched from being output by the host device to the display device to being output from another device to the display device.

8. The host device as claimed in claim 6or 7, wherein the communication interface includes at least one of a serial interface, an HDMI interface, and a D-sub interface.

9. A control method of a display device connected to a host device which provides an input source to the display device, the control method comprising:
switching the input source currently being output to the display device from being provided to the display device by the host device to being provided to the display device by another device;
generating a power save mode switching signal for switching the host device to a power save mode; and
transmitting the power save mode switching signal to the host device.

10. The control method as claimed in claim 9, wherein the host device includes a PC.

11. The control method as claimed in claim 9 or 10, wherein display device operates in a display mode selected from a personal computer (PC) mode, a television (TV) mode, an audio/video (A/V) mode, and a component mode, and the switching the input source comprises switching the display mode and providing the input source by a source device selected based on the selected display mode.

12. The control method as claimed in any one of claims 9 to 11, wherein the transmitting the power save mode switching signal comprises transmitting the power save mode switching signal using at least one communication interface selected from a serial interface, an HDMI interface, and a D-sub interface.

13. The control method as claimed in claim 12, wherein the transmitting the power save mode switching signal comprises, in response to the current input source being switched from being provided by the host device to being provided by another device, transmitting the power save mode switching signal using an HDMI-CEC interface.

14. A control method of a host device connected to at least one display device, the control method comprising:
monitoring a state of signals that are being received from the display device via a communication interface unit that communicates with the display device; and
in response to detecting a power save mode switching signal received from the display device during the monitoring, , controlling the host device to switch to a power save mode.

15. The control method of claim 14, wherein the power save mode switching signal is a signal generated in response to an input source received by the display device being switched from being provided to the display device by the host device to being provided to the display device by another device.
